# EUROPEAN PATENT APPLICATION

(11) **EP 0 812 097 A2**
(43) Date of publication of application: **10.12.1997**
(21) Application number: 97107992.6
(22) Date of filing: 16.05.1997
(51) Int. Cl.: H04M 3/50

(54) **Audiovisual messaging for a telephone system**

(30) Priority: 07.06.1996 US 660246
(71) Applicant: Siemens Business Communication Systems, Inc., Santa Clara, CA 95054 (US)
(72) Inventor: Rencken, Dieter W., Cupertino, CA 95014 (US)
(74) Representative: Allen, Derek

(57) **Abstract**

An audiovisual mail system for an audiovisual telephone system is provided. Unanswered calls in the audiovisual telephone system are directed to a messaging server. Audiovisual phone messages are stored in mass storage within the messaging server. In response to a command from a system subscriber, the audiovisual phone message stored in the mass storage are sent to the system subscriber. In the preferred embodiment, The audiovisual phone message are then played in real time by the system subscriber.

## Description

### Background

The present invention concerns audiovisual telephone systems and pertains particularly to the implementation of an audiovisual mail system for an audiovisual telephone system.

Modern telephone systems often provide voice messaging with various added capability. For example, a voice messaging system within a telephone system will generally provide an outgoing announcement and record incoming messages in addition to providing related applications such as auto-attendant, and additional call processing.

There has been increasing interest in establishing point-to-point communication using audiovisual technology. This allows users the ability to see each other as well as hear each other during the course of a remote conversation.

When implemented by a personal computer, some audio visual point-to-point products allow some ability for the personal computer to answer an audio-visual call and to store incoming audio-visual messages in a hard drive operating within the personal computer. This type of answering machine implementation within a personal computer is available, for example, from 8 X 8, Inc. having a business address of 2445 Mission College Boulevard, Santa Clara, California, as a DVC5 VX3300 Reference Board running Version 1.5 of the H.320/H.261 Codec software. However, such systems allows playback only at the personal computer. It is desirable to provide expanded versatility in handling audiovisual communications.

### Summary of the Invention

In accordance with the preferred embodiment of the present invention, an audiovisual mail system for an audiovisual telephone system is provided. Unanswered calls in the audiovisual telephone system are directed to a messaging server. Audiovisual phone messages are stored in mass storage within the messaging server. In the preferred embodiment, an outgoing announcement is played by the messaging server before accepting and storing audiovisual phone messages. The outgoing announcement is, for example, an audio visual announcement. Alternatively, the outgoing announcement is an audio only announcement. In response to a command from a system subscriber, the audiovisual phone message stored in the mass storage are retrieved and sent to the system subscriber. In the preferred embodiment, the audiovisual phone messages stored in the mass storage to the system subscriber is sent to the system subscriber as a real-time audiovisual data transmission. The audiovisual phone message are played in real time by the system subscriber.

The present invention provides for a versatile and an efficient messaging system for audiovisual communications.

### Brief Description of the Drawings

Figure 1 shows an audiovisual messaging system in accordance with the prior art.

Figure 2 shows a block diagram of a telephone system with the ability to provide audiovisual messaging in accordance with a preferred embodiment of the present invention.

Figure 3 shows additional implementation of an audiovisual messaging system in accordance with a preferred embodiment of the present invention.

### Description of the Prior Art

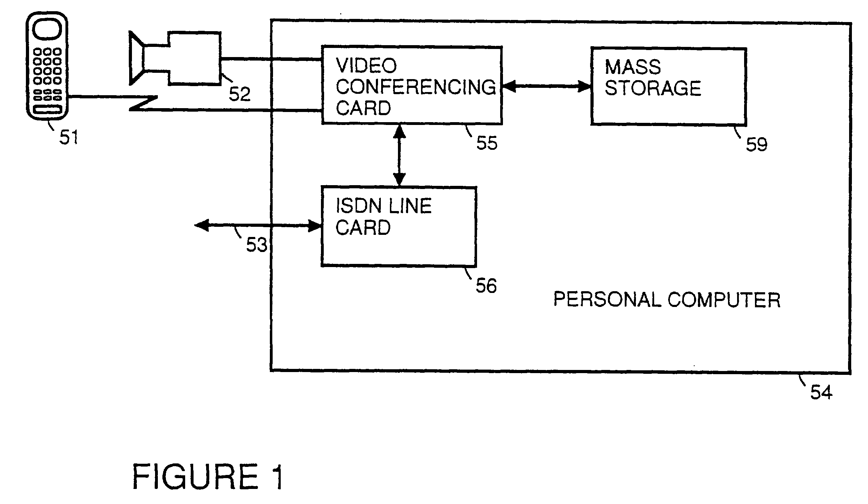

Figure 1 shows an audio visual messaging system implemented within a single personal computer 54. In this system personal computer 54 utilizes a monitor 53, a camera 52 and a telephone handset 51. During audiovisual point-to-point contact, personal computer 54 generates audiovisual transmissions using camera 52 and telephone handset 51. Audiovisual transmissions received by personal computer 54 are displayed in real time using the personal computer monitor, built-in sound of personal computer 54 and/or sound from handset 51. An ISDN link 53 represents an ISDN connection between personal computer 54 and an ISDN network. An ISDN line card 56 within personal computer 54 interfaces between personal computer 54 and ISDN link 53.

ISDN line card 56 interfaces to a video conferencing card 55 within personal computer 54. Video conferencing card 55 interacts with mass storage device 59, such as a hard disk drive or some other mass storage device. When an operator is not available to receive an incoming call, video conferencing card 55 receives any incoming audiovisual message from ISDN line 53 through ISDN line card 56 and places the incoming audiovisual message into mass storage 59.

In order to recover messages video conferencing card 55 recovers digitized video information from mass storage 59 to be played back in real time using monitor 53, built-in sound of personal computer 54 and/or sound from handset 51.

### Description of the Preferred Embodiment

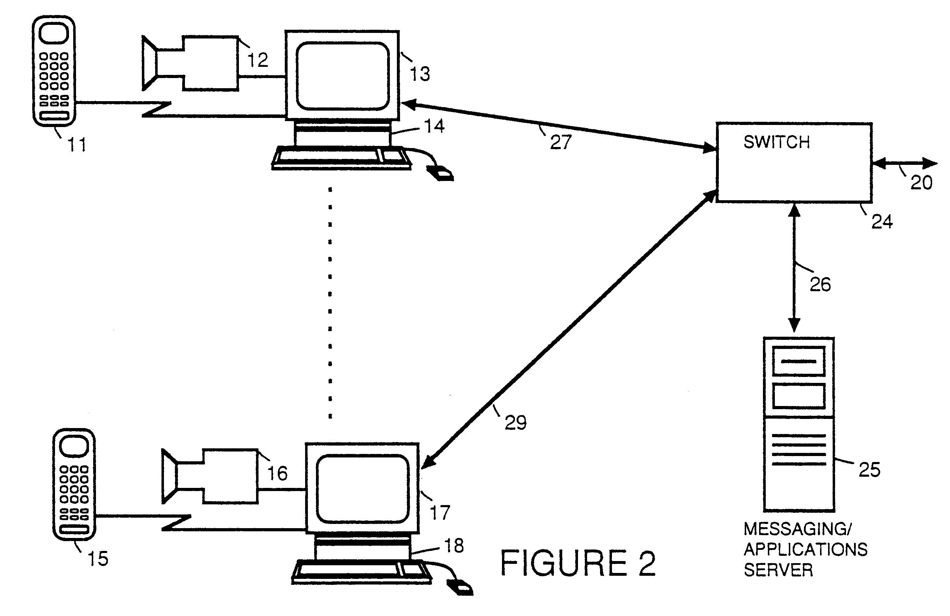

Figure 2 shows a block diagram of a telephone system with the ability to provide audiovisual messaging in accordance with a preferred embodiment of the present invention. A telephone switch 24 is connected to an integrated services digital network (ISDN) switching network through an ISDN line 20. For example telephone switch 24 is a private branch exchange (PBX). Switch 24 connects system subscribers (clients) to each other, to the ISDN switching network and to a messaging/applications server 25. Messaging/applications server 25 is connected to switch 24 through an ISDN line 26. While the present invention is described using an ISDN implementation, alternatively, the present invention may be utilized using other networking systems. For example, a public telephone system (POTS) may be utilized instead of an ISDN network system.

Each system subscriber is equipped to perform audiovisual communications. For example two system subscribers are shown in Figure 2. A first system subscriber includes a personal computer 14, a monitor 13, a camera 12 and a telephone handset 11. During audiovisual point-to-point contact, personal computer 14 generates audiovisual transmissions using camera 12 and telephone handset 11. Audiovisual transmissions received by personal computer 14 are displayed in real time using monitor 13, built-in sound of personal computer 14 and/or sound from handset 11.

Personal computer 14 is connected to switch 24 via an ISDN line 27. A second system subscriber includes a personal computer 18, a monitor 17, a camera 16 and a telephone handset 15. Personal computer 18 is connected to switch 24 via an ISDN line 29. During audiovisual point-to-point contact, personal computer 18 generates audiovisual transmissions using camera 16 and telephone handset 15. Audiovisual transmissions received by personal computer 18 are displayed in real time using monitor 17, built-in sound of personal computer 18 and/or sound from handset 15.

For incoming calls on ISDN line 20, switch 24 directs the incoming call to the appropriate system subscriber. If the appropriate system subscriber is unavailable, the incoming call is directed to messaging/applications server 25. Messaging/applications server 25 presents an outgoing announcement for the appropriate system subscriber and then receives an incoming message for the subscriber. In the preferred embodiment of the present invention, the outgoing announcement is an audio-visual announcement and an incoming audiovisual message is received. In an alternative preferred embodiment of the present invention, the outgoing announcement is a voice only announcement and an incoming audiovisual message is received.

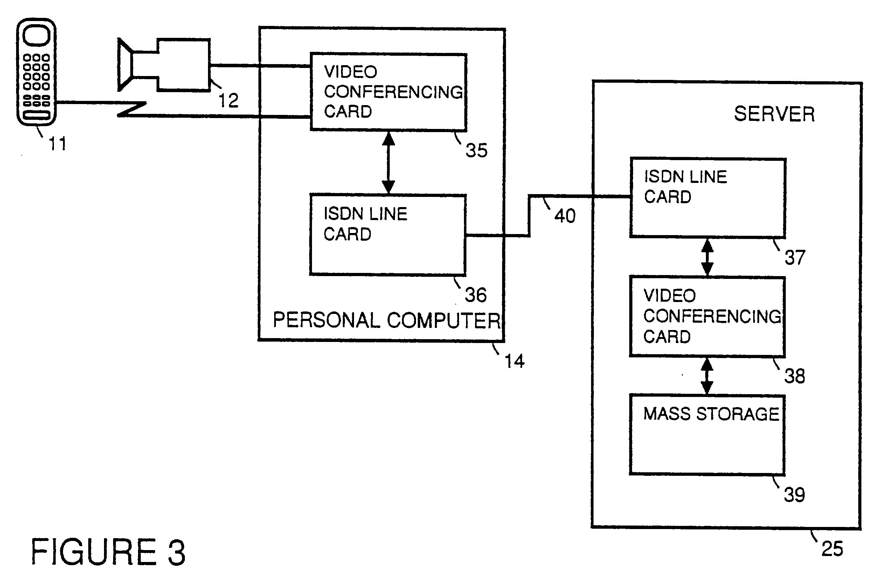

Figure 3 shows additional implementation detail of the audiovisual system shown in Figure 2. In Figure 3, messaging/applications server 25 is shown to be implemented as a personal computer which utilizes, for example, a Pentium processor available from Intel, having a business address of 2200 Mission College Boulevard, Santa Clara, California. An ISDN link 40 represents an ISDN connection between messaging/applications server 25 and personal computer 13 through switch 24. An ISDN line card 37 within messaging/applications server 25 interfaces between messaging/applications server 25 and ISDN link 40. ISDN line card 37 is, for example, an ISDN line card available from Promptus Communications, having a business address of 500 Airport Boulevard, Burlingame California.

ISDN line card 37 interfaces with a video conferencing card 38 within messaging/applications server 25. Video conferencing card 38 is, for example, a video conferencing card available from VCON Inc., 5000 Quorem Drive, Dallas, Texas. Video conferencing card 38 operates in accordance with the H.320 set of video conferencing standards as set out by the International Telecommunications Union (ITU). Alternatively, when a public telephone system (POTS) is utilized instead of an ISDN network system, video conferencing card 38 operates in accordance with the H.324 set of video conferencing standards as set out by the International Telecommunications Union (ITU).

Video conferencing card 38 interacts with mass storage device 39. For example, mass storage device 39 is a hard disk drive or some other mass storage device. When the audiovisual message system uses an outgoing audiovisual announcement, the outgoing audiovisual announcement is stored in mass storage device 39. When switch 24 directs a call to messaging/applications server 25, video conferencing card 38 accesses the outgoing audiovisual announcement from mass storage 39 and forwards the outgoing audiovisual announcement through ISDN line card 37 to ISDN line 26 (shown in Figure 2) and through to switch 24. Then video conferencing card 38 receives any incoming audiovisual message from ISDN line 26 through ISDN line card 37 and places the incoming audiovisual message into mass storage 39.

In order to recover messages from messaging/application server 25, personal computer 14 contacts messaging/application server 25 over ISDN link 40. In the preferred embodiment, communications over ISDN link are in accordance with the H.320 video conferencing standards. This allows for the transfer of digitized video information, digitized voice information and control information. The control information is sent via a data command channel within ISDN link 40. This is analogous to use of a telephone keypad in audio-only voice mail systems. In an alternative embodiment where messaging/application server 25 is connected to personal computer 14 via telephone lines (POTS), the H.324 set of standards can be used.

Using the data command channel of ISDN link 40, personal computer 14 can send a "PLAY MESSAGES" command to messaging/application server 25. In response to the command, messaging/application server 25 accesses messages for personal computer 14 from mass storage 39 and forwards the digitized voice and digitized video signal over ISDN link 40 to personal computer 14. Within personal computer 14, an ISDN line card 36 receives the transmission and forwards the transmission car to a video conferencing card 35. Video conferencing card 35 plays the message on monitor 13 (shown in Figure 2). ISDN line card 36 is, for example, an ISDN line card available from Promptus Communications. Video conferencing card 38 is, for example, a video conferencing card available from VCON.

The type of commands which may be sent from personal computer 14 to messaging/application server 25 are similar to commands used for voice-only messaging systems. For example, in the preferred embodiment, Table 1 below shows implemented commands.

**Table 1**

| Command | Description |
|---|---|
| PLAY MESSAGES | Play back all messages |
| SKIP MESSAGE | Skip to next message |
| PREVIOUS MESSAGE | Play previous message |
| ERASE MESSAGE | Remove message |
| STORE MESSAGE | Store message in archive |
| PLAY STORED MESSAGE | Plays stored messages |
| RECORD A GREETING | Records a Greeting |

The commands implemented for a specific application can vary significantly from the commands listed in Table 1 above.

## Claims

1. A method for providing an audiovisual mail system for an audiovisual telephone system comprising the steps of:
(a) directing unanswered calls in the audiovisual telephone system to a messaging server;
(b) storing an audiovisual phone message in mass storage within the messaging server;
(c) in response to a command from a system subscriber, sending the audiovisual phone message stored in the mass storage to the system subscriber; and,
(d) playing in real time the audiovisual phone message by the system subscriber.

2. A method as in claim 1 wherein in step (c), the audiovisual phone messages stored in the mass storage to the system subscriber is sent to the system subscriber as a real-time audiovisual data transmission.

3. A method as in claim 1 wherein step (b) includes playing an outgoing audiovisual announcement by the messaging server before storing audiovisual phone messages.

4. A method as in claim 1 wherein step (b) includes playing an audio announcement by the messaging server before storing audiovisual phone messages.

5. An audiovisual telephone system comprising:
an incoming transmission line;
a system subscriber, including means for taking part in point-to-point audiovisual communications;
a messaging server, including mass storage in which are stored audiovisual messages resulting from calls which are unanswered by the system subscriber;
a switch coupled to the incoming transmission line, the system subscriber and the messaging server, the switch directing the calls which are unanswered by the system subscriber to the messaging server;
wherein the messaging server in response to a command from a system subscriber, sends the audiovisual phone messages stored in the mass storage to the system subscriber.

6. An audiovisual telephone system as in claim 5 wherein upon receiving the audiovisual phone messages from the system sever, the system subscriber plays in real time the audiovisual phone messages.

7. An audiovisual telephone system as in claim 5 wherein the messaging server additionally includes means for playing an outgoing audiovisual announcement before storing audiovisual phone messages.

8. An audiovisual telephone system as in claim 5 wherein the messaging server additionally includes means for playing an outgoing audio announcement before storing audiovisual phone messages.

9. An audiovisual telephone system as in claim 5 wherein the incoming transmission line is an integrated services digital network (ISDN) transmission line.

10. An audiovisual telephone system as in claim 5 wherein the incoming transmission line is a telephone line.

11. An audiovisual telephone system as in claim 5 further comprising additional subscribers.

12. An audiovisual telephone system as in claim 5 wherein the switch is a private branch exchange (PBX).
